# EUROPEAN PATENT SPECIFICATION

(11) **EP 3 475 663 B1**
(45) Date of publication and mention of the grant of the patent: **13.07.2022**
(21) Application number: 17732205.4
(22) Date of filing: 19.06.2017
(51) Int. Cl.: G01D 5/353

(54) **FIBRE OPTIC SENSING**
FASEROPTISCHE ERFASSUNG
DÉTECTION PAR FIBRES OPTIQUES

(30) Priority: 23.06.2016 GB 201610996
(43) Date of publication of application: 01.05.2019
(73) Proprietor: OptaSense Holdings Limited, Hampshire GU14 0LX (GB)
(72) Inventor: GODFREY, Alastair, Farnborough Hampshire GU14 0LX (GB)
(74) Representative: Haseltine Lake Kempner LLP
(86) International application number: PCT/GB2017/051790
(87) International publication number: WO 2017/220985

(56) References cited:
- GB-A- 2 515 574
- US-A1- 2012 057 432
- US-A1- 2013 301 978
- US-A1- 2015 377 738
- US-A1- 2016 003 648

## Description

This application relates to distributed fibre optic sensing and in particular to fibre optic strain sensing.

Distributed fibre optic sensing is a known technique where an optical fibre is deployed as a sensing fibre in a location of interest and interrogated with optical radiation to provide monitoring of the environment along the length of the sensing fibre.

One type of distributed fibre optic sensor repeatedly interrogates the sensing fibre with coherent optic radiation and detects and analyses radiation which is Rayleigh backscattered from within the sensing fibre to provide sensing of disturbances, i.e. dynamic strains, acting on the sensing fibre. Such disturbances may, for example, be vibrations of the fibre such as caused by incident acoustic waves or the like. Such sensing is thus often referred to as distributed acoustic sensing (DAS), although it will be appreciated that the sensor may be sensitive to any type of incident mechanical disturbance or dynamic strain variation acting on the sensing fibre.

Such DAS systems can provide useful monitoring for dynamic disturbances, i.e. acoustic stimuli or vibrations or the like, and have been proposed for use in a range of different applications such as perimeter or border monitoring, monitoring of linear assets such a pipeline or transport infrastructure, e.g. road, railways etc. and monitoring of geological formations, e.g. hydrocarbon reservoirs or areas for storage/sequestration of unwanted/hazardous materials.

As mentioned such distributed fibre optic sensors based on Rayleigh backscatter are useful for detecting dynamic vibration or strain events and can be relatively sensitive to such disturbances. The sensor will have a limited dynamic range however and large amplitude disturbances acting on the sensing fibre may result in signal wrapping, e.g. for a phase based system a change of phase of more than 2π, leading to uncertainty in the measurements from such a system. Also conventional Rayleigh based distributed fibre optic sensors do not typically provide any information about slow acting changes to the static strain acting on the optical fibre.

Embodiments of the present disclosure relate to methods and apparatus for distributed fibre optic sensing that may improve and/or extend the information that may be determined from such sensors.

Related distributed fibre optic sensors are known from GB 2 515 574 A and US 2012/057432 A1.

Thus according to an aspect of the invention there is provided a distributed fibre optic sensor comprising:
an interrogator for, in use, interrogating a sensing optical fibre to perform distributed acoustic sensing and provide a measurement signals from each of a plurality of channels corresponding to sensing portions of the sensing optical fibre; and
a processor configured to analyse said measurement signals to detect a first characteristic signature, said first characteristic signature comprising a variation in the measurement signal from a plurality of channels that applies for a first channel and substantially all downstream channels and which occurs simultaneously on all such channels.

Thus as will be described in more detail below the sensor of various embodiments analyses the measurement signal from a distributed fibre optic sensor, for instances of a first characteristic signal where the first characteristic signal is an apparent measurement signal that simultaneously affects substantially all sensing channels from a first sensing portion to the end of the sensing fibre. The processor may be configured to identify an occurrence of the first characteristics signature as a large amplitude strain or other large amplitude disturbance. The location of the first channel may be identified as the location of the large amplitude strain.

In some embodiments the interrogator comprises a polarisation modulator for periodically varying a polarisation state of interrogating radiation output from the interrogator.

Embodiments relate to the interrogator and processor as may be manufactured and also to a sensor in situ with a sensing optical fibre optically coupled to the interrogator. In some embodiments there may be at least one modulation controller for applying a controlled modulation to the sensing optical fibre. The at least one modulation controller may comprise an actuator mechanically coupled to the sensing optical fibre for selectively applying a controlled strain to the sensing optical fibre and/or a polarisation modulator for applying a controlled polarisation modulation to interrogating radiation travelling in the sensing fibre. There may be a plurality of modulation controllers arranged along the sensing optical fibre at different defined locations.

The interrogator may comprise a first polarisation modulator for varying a polarisation state of interrogating radiation output from the interrogator, with the sensor being configured to vary the polarisation state of interrogating radiation output from the interrogator whilst one of the at least one modulation controllers is applying the controlled modulation to the sensing optical fibre. The processor may be configured to detect the first characteristic signature associated with the controlled modulation applied by the modulation controller and determine a polarisation state corresponding to a minimum amplitude of the first characteristic signature associated with that modulation controller. The processor may be further configured to detect, over time, any variation in the polarisation state corresponding to a minimum amplitude of the first characteristic signature associated with the controlled modulation applied by a modulation controller. Any detected variation in the polarisation state corresponding to a minimum amplitude of the first characteristic signature associated with the controlled modulation applied by a first modulation controller may be identified as being indicative of a change in strain acting on the sensing fibre upstream of said actuator.

In some embodiments the processor may be configured to adjust a controlled modulation applied by a second modulation controller upstream of the first modulation controller so as to compensate for the detected variation in the polarisation state corresponding to a minimum amplitude of the first characteristic signature associated with the controlled modulation applied by the first modulation controller.

The sensor may be used in variety of applications. The sensing optical fibre may deployed along at least one of: the path of a pipeline; the path of at least part of a transport network; the path of a railway; a border or perimeter; in the vicinity of a geological formation of interest; in the vicinity of a reservoir; and along the path of a power cable.

In another aspect there is provided a distributed fibre optic sensor comprising:
an interrogator unit configured to, in use, repeatedly interrogate a sensing optical fibre with optical radiation, detect backscatter optical radiation that has been Rayleigh backscattered from within said sensing optical fibre and analyse the backscatter to provide a measurement signals from each of a plurality of channels corresponding to sensing portions of the sensing optical fibre; and
a processor configured to analyse said measurement signals to detect a variation in the measurement signal from a plurality of channels that applies for a first channel and substantially all downstream channels and which occurs simultaneously on all such channels.

Aspects also relate to a method of distributed fibre optic sensing comprising:
interrogating a sensing optical fibre to perform distributed acoustic sensing and provide a measurement signals from each of a plurality of channels corresponding to sensing portions of the sensing optical fibre; and
analysing said measurement signals to detect a first characteristic signature, said first characteristic signature comprising a variation in the measurement signal from a plurality of channels that applies for a first channel and substantially all downstream channels and which occurs simultaneously on all such channels.

The method may be implemented using any of the variants of the apparatus discussed above. In particular an occurrence of the first characteristics signature is identified as occurrence of a large amplitude strain. The location of the first channel may be identified as the location of the large amplitude strain. The method may comprise periodically varying a polarisation state of interrogating radiation output from the interrogator.

The method may involve applying a controlled modulation to the sensing optical fibre at at least one defined location. The controlled modulation may comprise applying a controlled strain to the sensing optical fibre by a mechanical actuator and/or applying a controlled polarisation modulation to interrogating radiation travelling in the sensing fibre by a polarisation modulator. Controlled modulations may be applied sequentially at a plurality of different defined locations. The polarisation state of interrogating radiation input into the sensing optical fibre may be varied whilst a controlled modulation is applied to the sensing optical fibre at at least one of the defined locations. The method may comprise detecting the first characteristic signature associated with a controlled modulation applied at a defined location and determining a polarisation state corresponding to a minimum amplitude of the first characteristic signature associated with that controlled modulation. Any variation in the polarisation state corresponding to a minimum amplitude of the first characteristic signature associated with the controlled modulation applied at a defined location may be detected over time. Any detected variation in the polarisation state corresponding to a minimum amplitude of the first characteristic signature associated with the controlled modulation applied at a first defined location may be identified as being indicative of a change in strain acting on the sensing fibre upstream of said first defined location. The method may also comprise adjusting a controlled modulation applied at a second defined location upstream of the first defined location so as to compensate for the detected variation in the polarisation state.

The sensing optical fibre may be deployed along at least one of: the path of a pipeline; the path of at least part of a transport network; the path of a railway; a border or perimeter; in the vicinity of a geological formation of interest; in the vicinity of a reservoir; and along the path of a power cable.

Embodiments of the invention will be now be discussed with reference to the accompanying drawings, of which:
Figure 1 an apparatus for Rayleigh backscatter based distributed fibre optic sensing;
Figure 2a illustrates detection of a signature characteristic of a large amplitude strain;
Figure 2b illustrates example data from a DAS sensor subjected to a large strain; and
Figure 3 illustrates a distributed fibre optic strain sensor according to an embodiment.

Embodiments of the present disclosure relate to distributed fibre optic sensors, particularly to Rayleigh backscatter based distributed fibre optic sensors and in particular to detecting signal characteristics related to large amplitude strains.

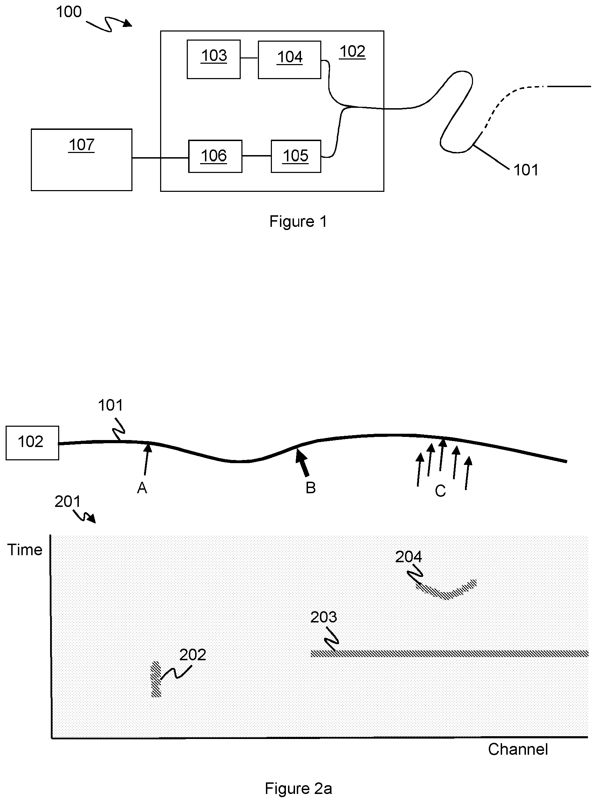

**Figure 1** illustrates an apparatus (100) for Rayleigh backscatter based distributed fibre optic sensing, sometimes referred to a distributed acoustic sensing (DAS). The DAS sensor comprises an optical fibre 101 disposed as a sensing fibre and optically coupled at one end to an interrogator unit 102, either directly through some suitable connection (which may be a removable connection) or in some instances indirectly, e.g. via an intermediate fibre or the like. The sensing fibre 101 can be many kilometres in length and can be, for instance of the order of 40km or so or more in length. The sensing fibre may be a standard, unmodified single mode optical fibre such as is routinely used in telecommunications applications without the need for deliberately introduced reflection sites such a fibre Bragg grating or the like. The ability to use an unmodified length of standard optical fibre to provide sensing means that low cost readily available fibre may be used. However in some embodiments the sensing fibre may comprise an optical fibre which has been fabricated or arranged to be especially sensitive to incident vibrations. Typically the sensing optical fibre will form part of a fibre optic cable structure, possibly as one of a bundle of optical fibres within the cable and optionally with other components such as strengthening or armouring elements or elements arranged to tailor the response to transverse strains. As the sensing fibre is typically relatively inexpensive the sensing fibre may be deployed in a location in a relatively permanent fashion as the costs of leaving the fibre in situ are not significant.

In operation the interrogator unit 102 repeatedly interrogates the sensing optical fibre 101, each interrogation comprising launching coherent interrogating electromagnetic radiation, which may for example comprise a series of optical pulses having a selected frequency pattern, into the sensing fibre. In one example the interrogating radiation may comprise two temporally (and hence spatially) separated pulses, with a predefined frequency difference between the pulses. In such a DAS sensor the frequency difference between the pulses defines a carrier frequency of interest. It will be understood however that DAS sensors using other forms of pulsed interrogating radiation or a continuously modulated wave are also known and may be used. Note that as used herein the term "optical" is not restricted to the visible spectrum and optical radiation includes infrared radiation and ultraviolet radiation and the term "light" shall also be interpreted accordingly. The interrogator unit 102 therefore comprises at least one optical source, such as a laser 103, and, in some embodiments, at least one optical modulator 104 for producing the interrogating radiation. In one embodiment the interrogating radiation (for a given interrogation) may comprise a plurality of optical pulses separated by a known optical frequency difference.

The phenomenon of Rayleigh backscattering results in some fraction of the light input into the fibre being scattered back to the interrogator unit, where it is detected and processed to provide a measurement signal which is representative of disturbances acting on the fibre. As the interrogating radiation is coherent the Rayleigh backscatter received back at the interrogator at any instant is an interference signal of the backscatter generated within the fibre from a particular part of the fibre. It will be noted this Rayleigh backscatter is generated by interaction between the interrogating radiation and inherent scattering sites present within the optical fibre. Thus the sensing function may be effectively distributed throughout the whole sensing fibre (although the returns are processed in time bins to provide results from individual sensing portions of the fibre). Such a sensor is therefore referred to as a distributed sensor or intrinsic sensor as the sensing is distributed throughout and intrinsic to the fibre itself. This is in contrast to sensors that used fibres having fibre Bragg gratings (FBGs) or similar deliberately introduced reflection sites where the sensing function is provided in defined areas, typically as a point sensor.

The distribution of scattering sites throughout an optical fibre is effectively random and thus the backscatter interference signal includes a component that varies randomly along the length of the sensing fibre. In general though, in the absence of any environmental stimulus acting on the sensing fibre the characteristics of the backscatter from a given sensing portion of the fibre will be the same for successive interrogations (assuming the characteristics of the interrogating radiation do not change). However an environmental stimulus such as an incident acoustic wave that creates a dynamic strain on a section of fibre will result in a change in the effective optical path length for that sensing portion with a resultant variation in the properties of the backscatter interference signal from that section. This variation can be detected and used to indicate the extent of disturbances acting on the sensing fibre.

The interrogator unit 102 thus also comprises at least one photodetector 105 arranged to detect radiation which is Rayleigh backscattered from the intrinsic scattering sites within the fibre 101.

The signal from the photodetector is processed by signal processor 106 in time bins corresponding to the round trip travel time to defined sensing portions of the sensing fibre. The signals in each of the time bins are processed to detect variation in the backscatter properties and generate a measurement signal for each sensing portion.

In some examples the signal processor demodulates the returned signal based on the frequency difference between the optical pulses of interrogating radiation launched into the sensing fibre. The interrogator may operate as described in GB2,442,745 or WO2012/137022 for example or as described in WO2012/137021, the contents of each of which are incorporated by reference.

The phase of a measurement signal may be derived from the backscattered optical radiation from various sections of the optical fibre. Any changes in the effective optical path length within a given section of fibre, such as would be due to incident pressure waves causing strain on the fibre will lead to a change in the measured phase between repeated interrogations. Thus dynamic changes acting on the fibre can therefore be detected in each of a plurality of sensing portions of the optical fibre. The magnitude of the change in phase is related to the effective change in optical path length and hence indicative of the strain on that sensing portion of the sensing fibre.

The form of the optical input and the method of detection allow a single continuous optical fibre to be spatially resolved into discrete longitudinal sensing portions. That is, the measurement signal sensed at one sensing portion can be provided substantially independently of the measurement signal at an adjacent portion. The spatial resolution of the sensing portions of optical fibre may, for example, be approximately 10m, which for a continuous length of fibre of the order of 40km say provides 4000 independent acoustic channels or so deployed along the 40km of fibre. More channels could be arranged on a fibre with a different channel width.

Note that term "acoustic" shall mean any type of pressure wave or mechanical disturbance that may result in a change of strain on an optical fibre and for the avoidance of doubt the term acoustic be taken to include ultrasonic and subsonic waves as well as seismic waves or other induced vibrations. As used in this specification the term "distributed acoustic sensing" or "DAS" will be taken to mean sensing by optically interrogating an optical fibre to provide a plurality of discrete acoustic sensing portions distributed longitudinally along the fibre and the term "distributed acoustic sensor" shall be interpreted accordingly.

The output from the interrogator unit 102 may thus be a measurement signal for each sensing portion of the relevant sensing fibre 101 which is indicative of the acoustic signals or dynamic strains acting on that sensing portion. The individual sensing portions may also be referred to as channels of the DAS sensor. The sensor thus produces measurement signals for a plurality of channels of the DAS sensor. The output of the interrogator unit 102 may be passed to a data processor 107 which may be configured to analyse the measurement signals for the various channels. The data processor 107 may be co-located with the interrogator unit 102 or remote therefrom.

As noted previously such systems can provide relatively accurate and sensitive detection of dynamic strains acting on a sensing portion, with the measurement signal from one sensing portion being substantially independent of that from another sensing portion.

In embodiments of the present invention the backscatter signals from a plurality of different sensing portions of the sensing fibre, i.e. channels of the sensor, may be analysed to detect a characteristic signature indicative of a localised large amplitude strain on the sensing fibre.

Embodiments of the present invention rely, at least partly, on the realisation that a large amplitude strain, or high strain rate, acting on the sensing fibre can result in a change to the characteristics of the interrogating radiation at the location of the large strain.

For example consider a DAS system where the interrogating radiation for each interrogation comprises a pulse of coherent optical radiation. A large amplitude strain acting on the sensing fibre at a given location can modulate the characteristics of the pulse within the sensing optical fibre at that location. This could be a modulation of the polarisation and/or the phase of the pulse, although it is believed that the main cause of the change in pulse characteristics is strain induced polarisation change.

It has been appreciated that this modulation of characteristics of the interrogating radiation, e.g. polarisation of the pulse, can lead to a detectable change in the measurement signal from a sensing portion. In this case the change in measurement signal between one interrogation and the next is due to a variation in the characteristics of the interrogating radiation reaching that sensing portion from one interrogation to another. It will be appreciated that if, as a result of a large strain at a first location along the length of the sensing optical fibre, the pulse characteristics are modulated at that first location, it will be the pulse as modulated which reaches all subsequent sensing portions of the optical fibre as it travels further along the sensing fibre. Thus the result of a large strain occurring at a first location along the sensing fibre will be a change in measurement signal starting at the first location, i.e. a first channel, and applying effectively simultaneously to substantially all subsequent channels of the sensor, that is all downstream sensing portions that are between the first location and the distal end of the fibre.

For conventional DAS sensing the polarisation state of the interrogating radiation is substantially consistent from one interrogation to the next and in the absence of any environmental stimulus acting on the fibre the polarisation state of the interrogating radiation reaching any given sensing portion will be substantially consistent from one interrogation to the next. Low amplitude strains acting on a given sensing can result in a detectable change in effective optical path length for that sensing portion but don't substantially effect the polarisation state of the interrogating radiation for subsequent sensing portions of the sensing fibre. A large strain or large strain rate occurring as the interrogating radiation is traversing a given sensing portion can however result in a significant change in the polarisation state of the interrogating radiation. Birefringence within the sensing fibre means the effective refractive index of the sensing fibre varies with polarisation state of the interrogating radiation. Thus, a change in polarisation state of the interrogating radiation can result in a change in the apparent refractive index, and hence effective optical path length, of substantially all subsequent sensing portions.

This means that a large amplitude strain occurring at a first location along the length of the sensing fibre will result in an effectively simultaneous variation in the measurement signal for all subsequent sensing portions of the optical fibre, i.e. all downstream channels of the DAS sensor. This is in contrast to detection of lower amplitude strains where the modulation which gives rise to a detectable variation in measurement signal is a modulation of the effective optical path length of that sensing portion, which applies for that sensing portion only.

A large strain occurring at a first location of the sensing fibre as interrogating radiation passes through the first location can thus vary the polarisation state of the interrogating radiation from that point onwards. As mentioned this may appear as an apparent signal applying instantaneously to that channel and substantially all subsequent channels of the sensing fibre. In a waterfall type plot this may appear as a line of increased intensity signal applying to substantially all channels of the sensing fibre from the first location onwards. For a single pulse DAS system based on intensity variation this would be a step change in intensity. For phase based systems there may be an apparent step change in phase with random amplitude (within ±π radians) from channel to channel.

In embodiments of the invention the data processor 107 may therefore be arranged to analyse the measurement signals from a plurality of sensing portions, i.e. a plurality of channels of the sensor, to detect a characteristic signature of a large amplitude strain. This characteristic signature may be variation in the measurement signal from a plurality of channels that applies for a first channel and substantially all downstream channels and which occurs effectively simultaneously on all such channels. The processor may be configured to identify an occurrence of the first characteristics signature as a large amplitude strain. The processor may additionally be configured to identify the location of the first channel as the location of the large amplitude strain.

The principles of detecting a characteristic signature of a large amplitude strain and how this may be distinguished from conventional detection of lower amplitude strains is illustrated with respect to **figure 2a.** Figure 2a illustrates a Rayleigh based distributed fibre optic sensor such as described above having a sensing fibre 101 deployed in an area interest and connected at a first end (the proximal end) to an interrogator unit 102. Figure 2a also illustrates an idealised waterfall type plot such as may be produced by such a sensor.

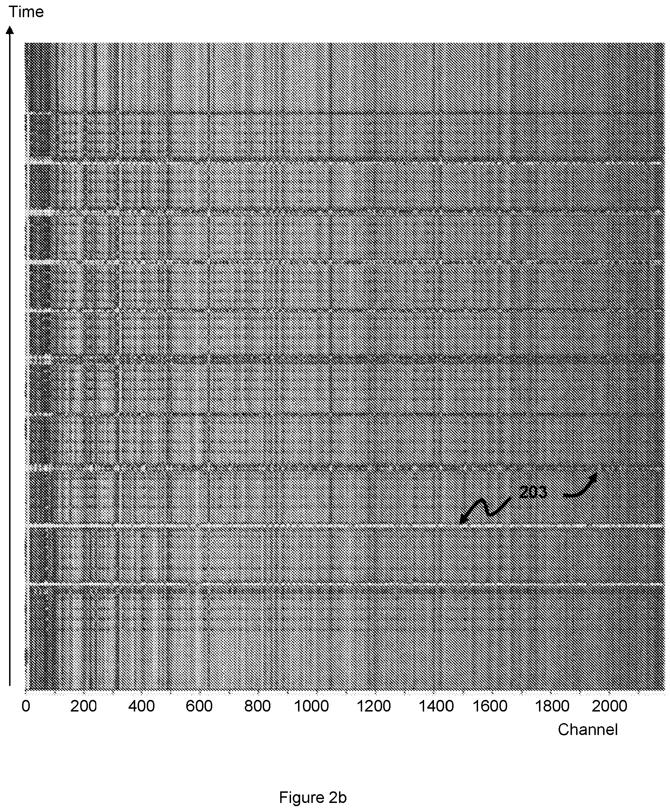

The waterfall plot shows an indication of the detected measurement signal for the channels of sensing fibre 101 against time, with the intensity of any detected variation being plotted (in this example figure 2) by greyscale variation.

Figure 2a illustrates three different types of disturbance acting at different locations of the sensing fibre at different times. Disturbance A corresponds to a relatively low amplitude dynamic strain variation. This may the type of acoustic signal that DAS sensors are typically employed to detect. In this example the disturbance A is relatively localised at a first location. This results in a relatively localised disturbance being detected in the channel or channels in the immediate vicinity of the first location. This may lead to a detectable signal in the relevant channels which may continue for as long as the disturbance is continuing, as illustrated by feature 202 in the waterfall plot. As mentioned above such a disturbance causes a localised variation in the effective optical path length of the relevant sensing portions which provides a detectable signal at the corresponding channels but which does not impact on any other sensing portions not directly disturbed by the disturbance.

Disturbance B represents a large amplitude strain event occurring at a second location of the optical fibre, the disturbance being sufficient to impart a significant modulation in polarisation to optical radiation propagating in the optical fibre. This again creates a detectable change in measurement signal from the sensor, but this this time due to a varying in the characteristics of the interrogating radiation. As such this variation applies to that sensing portion and all subsequent sensing portions through which the modulated interrogating radiation subsequently propagates. This appears to produce an effectively simultaneous change in the measurement signal from all sensing portions from the second location to the distal end of the fibre, i.e. all downstream channels (in the sense of propagation of the interrogating radiation away from the interrogator unit). This is illustrated by feature 203 in the idealised waterfall plot. This signal will continue as long as the large disturbance continues.

It will be appreciated that some acoustic/seismic events may influence a number of channels without a localised large strain of the type described. Disturbance C illustrated an acoustic wave-front of relatively large spatial extent being incident on the sensing fibre 101 at a third location. In such a case however it is unlikely that the wave-front is incident on all parts of the sensing optical fibre 101 at the same time and instead different sensing portions may be disturbed at different times as the wave-front propagates past the sensing fibre. The pattern of disturbances will depend on the deployment of the sensing fibre in the environment and the shape of the wave-front. Figure 2 illustrates an example that may apply when an acoustic wave from a relatively distant source interacts with a generally linear sensing fibre. There may be an initial disturbance at a channel, e.g. corresponding to the sensing portion at the point of closest approach to the origin of the wave, which then spreads to adjacent channels at different times as the wave reaches those sensing portions, leading to a feature such as illustrated as 204.

It will of course be appreciated that the waterfall plot illustrated in figure 2 is illustrated for the purposes of explanation only and need not be generated in a practical system.

**Figure 2b** illustrates a waterfall plot of data from an actual DAS system where the sensing fibre was repeatedly subjected to controlled large strains at the start of the sensing fibre, i.e. at the proximal end of the sensing fibre (channel 0). Like the idealised plot of figure 2a, the waterfall plot illustrates the data of the various channels of the sensor, with time running vertically (in this example). The amplitude or intensity of any measured disturbance signal is indicated (in the practical system) by colour intensity Distinct features 203 can clearly be seen effecting all channels simultaneously. In this example, with channels running horizontally, the features appears as clear and distinct horizontal lines that apply for as long as the strain is occurring.

The data processor 107 may thus be configured to analyse the measurement signals from a plurality of channels of the sensor for variation in the measurement signal that applies for a first channel and substantially all downstream channels and which occurs effectively simultaneously on all such channels. Detection of such a characteristic signature may be used as an indication of a large amplitude strain. The processor may therefore flag the presence of the characteristic signature, e.g. by displaying an alert on a suitable graphical display or generating some other status alert or message. The processor may further identify the location of the large amplitude strain as corresponding to the location of the first channel, i.e. the most upstream channel at which the simultaneous signal variation is detected.

The data processor may analyse all channels of the sensor or may, analyse a subset of the channels for the characteristic signature to reduce processing burden, at least initially. For example as part of a multi-stage detection of large amplitude strains a first subset may be formed from channels at different positions along the length of the sensing fibre and analysed. If it appears the characteristic signature is present in the first subset then more channels may be added and the additional channels also analysed to confirm the characteristic signature is present.

The size of disturbance needed to create a clearly visible signal in this way is much larger than that required to generate a conventional acoustic signal on a given channel as described previously. For example, a bend in the sensing fibre through 180 degree with a bend radius of 50 mm or so made over about 1 second or so would give rise to a detectable signal, as would similar disturbances of the same order. Likewise a direct relatively high impact shock to the sensing fibre, e.g. of the order of stamping directly on the fibre optic cable, would also be expected to show a detectable signal. A strain rate of the order of 10⁻⁴ per second or so may give raise to a detectable signal of this type.

Events such as landslip or rock falls occurring at the location of a buried sensing fibre may well produce strains of this order and thus be detectable by the method of the present disclosure. As mentioned previously DAS sensor have been proposed for use for monitoring assets such as pipelines or railways. The occurrence of a landslip or rock fall in the vicinity of the asset would clearly be of interest. For pipelines a burst of a high pressure pipeline would also clearly be of interest and would lead to a detectable signal of the sort discussed.

One application that may make use of detection of large disturbances of this type may be detection of failure of a power cable, especially a submarine power cable. Power cables are often used as part of a high voltage power distribution/transmission system, especially where overhead cables or the like are not practical. Such power cables for high voltage AC power distribution may comprise various conductors insulated from one another and the environment. In some instances the insulation may fail causing a short circuit between the conductors and/or the environment. The high voltages involved mean that such short circuit failures may be very energetic events that may result in significant damage to the power cable. Typically this results in the relevant part of the power distribution network having to be shut down until the relevant part of the power cable can be repaired/replaced.

In some applications, for instance for submarine power cables, determining the location of the fault and hence the damaged section of the power cable and may conventionally involve having to physically inspect the cable, which may involve raising it from the seabed. This can be a slow and expensive process. It has been proposed to use a DAS sensor with a sensing fibre coupled to or embedded within the power cable to monitor for a disturbance associated with an energetic short circuit event of this type.

The disturbance associated with such a short circuit failure may be significantly energetic however. The disturbance may be so large that much of the sensing fibre may, in the event of such a fault, be saturated with a signal due to the brief but large current flow during the short circuit. This may make it difficult to accurately determine the actual location of the fault. There will however be a large disturbance at the fault location itself which result in a modulation of the characteristics of interrogating radiation propagating past the fault location which will give rise to a characteristic signal of the type described. In this instance the modulation of the characteristics may in part be caused by a significant temperature variation affecting the sensing fibre at this location. Detecting the location of the large disturbance can therefore be used to aid in detecting the location of the fault along the power cable.

As noted above it is understood that the main effect that causes the modulation of the characteristics of the interrogating radiation is an induced polarisation modulation, which may principally be a strain induced modulation but as noted above a significant rapid temperature change may also result in some modulation of the interrogating radiation. The extent to which a strain at a given portion of the optical fibre results in a polarisation modulation of the interrogating radiation does depend on the polarisation state of the interrogating radiation as it reaches the strained section, which clearly depends on the initial polarisation state of the interrogating radiation launched into the fibre and the cumulative effect of any modulation of the polarisation as the radiation propagates through the preceding part of the sensing fibre.

In theory therefore it is possible that due to the initial polarisation state of the interrogating radiation that a given large amplitude strain occurring at a specific location may experience no or only a limited polarisation modulation due to the large strain. It has been found by experiment however that whilst a given channel of the sensing fibre may experience a sensitivity minimum (in terms of producing a detectable variation in measurement signal due to a large amplitude strain) for some initial polarisation states of the interrogating radiation, there is typically some modulation experienced and thus some detectable signal that results. It has further been found that the minimum is found to occur only over a very limited range of polarizations and zero sensitivity simultaneously on all channels is never reached. The chance of a large amplitude strain on the fibre failing to produce any detectable signal at all is therefore very low in a practical system.

In some embodiments however the interrogator unit may comprise a polarisation modulator and may be configured to periodically vary the polarisation state of the interrogating radiation launched into the sensing optical fibre. For instance the interrogator unit 102 may operate normally with a first polarisation state but may periodically use a second, different, polarisation state. It is likely that a large strain occurring would produce a detectable signal having the characteristic signature between repeated interrogations at the first polarisation state. However in the unlikely event that a large amplitude strain has occurred at a location which results in no modulation for interrogating radiation launched at the first polarisations state, the signals from repeated interrogations at the second polarisation state could also be analysed for the characteristic signal. Repeats of the second polarisation state may be much less frequent that repeats of the first polarisation state so as to not significantly interfere with the normal operation of the sensor.

In some embodiments a controlled large strain may be deliberately applied to the sensing fibre at one or more defined locations in order to determine information about any changes to static strain acting on the sensing fibre.

As mentioned above the extent to which a given large strain applied at a first location results in a modulation of the properties of the interrogating radiation and hence a detectable signal depends, at least partly, on the polarisation state of the interrogating radiation reaching the first location which in turn depends on the initial polarisation of the interrogating radiation launched into the sensing fibre and the cumulative effect of any polarisation modulation from the preceding fibre. As also discussed it has been found that the sensitivity minimum may be experienced at the first location for a very limited range of initial polarisation of the interrogating radiation.

The initial polarisation state that corresponds to a sensitivity minimum for a controlled large amplitude strain deliberately applied at a first location may therefore be determined periodically. If there is a change in the initial polarisation state required for the sensitivity minimum this can be taken as an indication that the cumulative modulation from the fibre upstream of the first location has changed, which can be taken as an indication that the static strain on the upstream part of the sensing fibre, i.e. preceding the first location, has changed.

By applying controlled large amplitude strains at a plurality of different locations along the length of the sensing fibre and determining the initial polarisation state corresponding to a sensitivity minimum for the strain applied at each location in turn then the sensing fibre can effectively be divided into a series of sections. Any significant change in static strain for a given section will result in a change in the polarisation state required for minimum sensitivity of all downstream locations at which a controlled strain is applied.

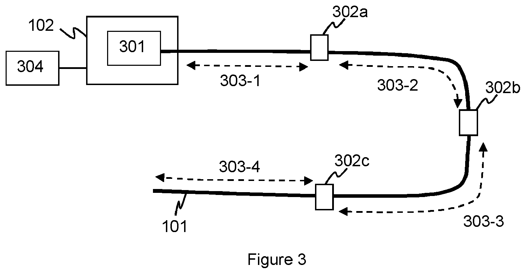

**Figure 3** illustrates a distributed fibre optic sensing system according to an embodiment. Figure 3 illustrates a distributed fibre optic sensing interrogator unit 102 along the lines as described above for interrogating a sensing optical fibre 101. In this embodiment however there is a polarisation modulator 301 for modulating the initial polarisation state of interrogating radiation launched into the sensing optical fibre 101.

The sensing fibre is coupled to a plurality of modulation controllers 302a-c at different points along its length. The modulation controllers 302a-c are configured to provide a controlled modulation. In some embodiments at least some modulation controllers may be actuators, for instance any type of controlled mechanical actuator capable of selectively applying a controlled relatively large amplitude strain to the sensing fibre. The sensing fibre may be coupled to the actuator in any convenient way and in some embodiments may be wound around at least some of the actuators. These actuators effectively divide the sensing fibre into a number of strain sensing sections 303-1 to 303-4 as will be explained below.

In use one of the actuators may be activated, say 302a, by controller 304, to apply the known relatively large strain to the fibre whilst the sensing fibre 101 is interrogated by the interrogator unit 102. As discussed above the resulting strain related polarisation modulation can result in a detectable signal in the measurement signal from all sensing portions downstream of the actuator applying the large strain, e.g. all of sections 302-2 to 303-4. The controller may then control the polarisation modulator 301 to varying the polarisation modulation applied to the output of the interrogator unit 102 whilst continuing to apply the controlled large strain from actuator 302a. The polarisation state that applies to a sensitivity minimum, i.e. the lowest detectable signal with the large strain applied, is recorded.

This process is repeated separately for each of the other actuators 302b and 302c to determine the polarisation state that corresponds to a sensitivity minimum for those actuators.

Periodically this process is repeated and any changes in the polarisation state required for minimum sensitivity for an actuator determined. If there is no significant change in strain for the sections of sensing fibre 101 upstream of the relevant actuator then it would be expected that the polarisation state required for minimum sensitivity would remain the same. However in the event that strain in a given section of sensing fibre has changed significantly the polarisation state for minimum sensitivity of all downstream actuators will have changed.

For example if there were a slow variation in the static strain on section 303-2, which would not be detectable by standard DAS sensing, this would lead to a variation in the polarisation states required for minimum sensitivity for actuators 302b and 302c, however the polarisation state for minimum sensitivity of actuator 302a would remain the same.

Thus if the polarization of the interrogating radiation required to give the large disturbance sensitivity minimum for each section 303-1 to 303-4 is monitored, any slow change in strain of the previous sections can be indirectly detected.

In some embodiments the polarisation of the interrogating radiation output from the interrogator unit may be continuously cycled through all states and the position of the sensitivity minimum in all sections may be monitored as a function of time. Alternatively, this could be done periodically, say, once per day in some implementations, to see if any large scale but slow strain has occurred. It would not affect normal functionality of the DAS sensor, and should be temperature insensitive.

Instead of, or in addition to, applying a controlled strain to the sensing fibre at certain locations to impart a controlled strain-induced polarisation modulation, a direct controlled polarisation modulation could be applied optically by a suitable polarisation modulator. In other words at least one of the modulation controllers 302a-c may comprise a polarisation modulators configured to apply a known polarisation modulation at that point. Controlling the optical polarisation modulation applied directly in this way still effectively divides the sensing fibre into different sections and allows detection of any changes in static strain as described above by looking for the initial polarisation state that corresponds to a sensitivity minimum to the applied controlled polarisation modulation.

Thus a change in the initial polarisation state of interrogating radiation that results in a sensitivity minimum to a controlled polarisation modulation applied by a given modulation controller may be indicative of a change in static strain of a preceding section of the sensing fibre. For example at a first time, T1, the initial polarisation state required to provide minimum sensitivity to the controlled modulation applied by modulation controller 302a may be a first state Pa1. Likewise the initial polarisation states leading to minimum sensitivity to the controlled modulations applied by modulation controllers 302b and 302c may be states Pb1 and Pc1 respectively. If at a second time T2 the initial polarisation state leading to the sensitivity minimum to the controlled modulation applied by controller 302a is still Pa1 then this implies that there has been no significant change to the static strain over section 303-1. If however the initial polarisation state leading to the sensitivity minimum for the controlled modulation applied by controller 302b has changed to a different state, Pb2 say, then this implies that the static strain over section 303-2 has varied. It will therefore also be likely that the initial polarisation state leading to the sensitivity minimum for the controlled modulation applied by controller 302c will also have changed to a different state, Pc2 say.

In some embodiments, having determined that the initial polarisation state corresponding to a sensitivity minimum for the controlled modulation applied by a given polarisation controller has changed - indicating a change in static strain in the preceding section of fibre - the modulation controller at the start of that section may be controlled to compensate for the change in static strain. Thus in the example discussed above, in the event that the initial polarisation state corresponding to the sensitivity minimum to the controlled modulation applied by controller 302b changes from Pb1 to Pb2 (indicating a change in static strain over section 303-2) the modulation controller 302a may be controlled to apply a continuous modulation which is adjusted until the initial polarisation state corresponding to a sensitivity minimum for controller 302b again corresponds to Pb1. At this point it can be assumed that the modulation applied by controller 302a compensates for the change in static strain over section 302-2. In this case the initial polarisation state corresponding to the sensitivity minimum for controller 302c should also return to being Pc1, unless there has also been a change in static strain over section 303-3. Thus by first detecting a change in static strain over a given section of sensing fibre and then compensating for such a change any static strain that has also changed for downstream sections of fibre may also be determined.

It should be noted that the above-mentioned embodiments illustrate rather than limit the invention, and that those skilled in the art will be able to design many alternative embodiments without departing from the scope of the appended claims. Features from various embodiments may be combined and used together except where expressly indicated otherwise. The word "comprising" does not exclude the presence of elements or steps other than those listed in a claim, "a" or "an" does not exclude a plurality, and a single feature or other unit may fulfil the functions of several units recited in the claims. Any reference numerals or labels in the claims shall not be construed so as to limit their scope.

## Claims

1. A distributed fibre optic sensor (100) comprising:
an interrogator (102) for, in use, interrogating a sensing optical fibre (101) to perform distributed acoustic sensing and provide a measurement signal from each of a plurality of channels corresponding to sensing portions of the sensing optical fibre; and
a processor (107) configured to analyse said measurement signals to detect a first characteristic signature, said first characteristic signature (203) comprising a variation in the measurement signal from a plurality of channels that applies for a first channel and substantially all downstream channels and which occurs simultaneously on all such channels.

2. A distributed fibre optic sensor as claimed in claim 1 wherein the processor (107) is configured to identify an occurrence of the first characteristic signature as a large amplitude strain.

3. A distributed fibre optic sensor as claimed in claim 2 wherein the processor (107) is configured to identify the location of the first channel as the location of the large amplitude strain.

4. A distributed fibre optic sensor as claimed in any preceding claim wherein the interrogator comprises a polarisation modulator (301) for periodically varying a polarisation state of interrogating radiation output from the interrogator.

5. A distributed fibre optic sensor as claimed in any preceding claim further comprising said sensing optical fibre (101) optically coupled to the interrogator (102).

6. A distributed fibre optic sensor as claimed in claim 5 comprising at least one modulation controller (302a, 302b, 302c) for applying a controlled modulation to the sensing optical fibre.

7. A distributed fibre optic sensor as claimed in claim 6 wherein at least one modulation controller (302a, 302b, 302c) comprises an actuator mechanically coupled to the sensing optical fibre for selectively applying a controlled strain to the sensing optical fibre.

8. A distributed fibre optic sensor as claimed in claim 6 wherein at least one modulation controller (302a, 302b, 302c) comprises a polarisation modulator for applying a controlled polarisation modulation to interrogating radiation travelling in the sensing fibre.

9. A distributed fibre optic sensor as claimed in claim 7 or claim 8 wherein there are a plurality of said modulation controllers (302a, 302b, 302c) arranged along the sensing optical fibre (101) at different locations.

10. A distributed fibre optic sensor as claimed in any of claims 6 to 9 wherein the interrogator (102) comprises a first polarisation modulator (301) varying a polarisation state of interrogating radiation output from the interrogator, the sensor being configured to vary the polarisation state of interrogating radiation output from the interrogator whilst one of said at least one modulation controllers (302a, 302b, 302c) is applying said controlled modulation to the sensing optical fibre.

11. A distributed fibre optic sensor as claimed in claim 10 wherein the processor (107) is configured to detect the first characteristic signature (203) associated with the controlled modulation applied by the modulation controller (302a, 302b, 302c) applying said controlled modulation and determine a polarisation state corresponding to a minimum amplitude of the first characteristic signature associated with that modulation controller.

12. A distributed fibre optic sensor as claimed in claim 11 wherein the processor (107) is configured to detect, over time, any variation in the polarisation state corresponding to a minimum amplitude of the first characteristic signature associated with the controlled modulation applied by a modulation controller (302a, 302b, 302c).

13. A distributed fibre optic sensor as claimed in claim 12 wherein the processor (107) is configured to identify any detected variation in the polarisation state corresponding to a minimum amplitude of the first characteristic signature associated with the controlled modulation applied by a first modulation controller (302a, 302b, 302c) as being indicative of a change in strain acting on the sensing fibre (101) upstream of said actuator.

14. A distributed fibre optic sensor as claimed in claim 13 wherein the processor is configured to adjust a controlled modulation applied by a second modulation controller (302a) upstream of the first modulation controller (302b) so as to compensate for the detected variation in the polarisation state corresponding to a minimum amplitude of the first characteristic signature associated with the controlled modulation applied by the first modulation controller.

15. A method of distributed fibre optic sensing comprising:
interrogating a sensing optical fibre (101) to perform distributed acoustic sensing and provide a measurement signals from each of a plurality of channels corresponding to sensing portions of the sensing optical fibre; and
analysing said measurement signals to detect a first characteristic signature (203), said first characteristic signature comprising a variation in the measurement signal from a plurality of channels that applies for a first channel and substantially all downstream channels and which occurs simultaneously on all such channels.

## Patentansprüche

1. Verteilter faseroptischer Sensor (100), umfassend:
eine Abfrageeinrichtung (102) zum Abfragen einer erfassenden optischen Faser (101) im Betrieb, um eine verteilte akustische Erfassung durchzuführen und ein Messsignal von jedem einer Vielzahl von Kanälen bereitzustellen, die Erfassungsabschnitten der erfassenden optischen Faser entspricht; und
einen Prozessor (107), der konfiguriert ist, um die Messsignale zu analysieren, um eine erste charakteristische Signatur zu detektieren, wobei die erste charakteristische Signatur (203) eine Variation des Messsignals von einer Vielzahl von Kanälen umfasst, die für einen ersten Kanal und im Wesentlichen alle nachgeordneten Kanäle gilt und die gleichzeitig auf allen solchen Kanälen auftritt.

2. Verteilter faseroptischer Sensor nach Anspruch 1, wobei der Prozessor (107) konfiguriert ist, um ein Auftreten der ersten charakteristischen Signatur als eine große Amplitudendehnung zu identifizieren.

3. Verteilter faseroptischer Sensor nach Anspruch 2, wobei der Prozessor (107) konfiguriert ist, um die Stelle des ersten Kanals als die Stelle der großen Amplitudendehnung zu identifizieren.

4. Verteilter faseroptischer Sensor nach einem der vorstehenden Ansprüche, wobei die Abfrageeinrichtung einen Polarisationsmodulator (301) zum periodischen Variieren eines Polarisationszustands einer Abfragestrahlungsausgabe von der Abfrageeinrichtung umfasst.

5. Verteilter faseroptischer Sensor nach einem der vorstehenden Ansprüche, ferner umfassend die erfassende optische Faser (101), die optisch mit der Abfrageeinrichtung (102) gekoppelt ist.

6. Verteilter faseroptischer Sensor nach Anspruch 5, umfassend mindestens eine Modulationssteuerung (302a, 302b, 302c) zum Anwenden einer gesteuerten Modulation auf die erfassende optische Faser.

7. Verteilter faseroptischer Sensor nach Anspruch 6, wobei mindestens eine Modulationssteuerung (302a, 302b, 302c) einen Aktor umfasst, der mechanisch mit der erfassenden optischen Faser gekoppelt ist, um selektiv eine kontrollierte Dehnung auf die erfassende optische Faser anzuwenden.

8. Verteilter faseroptischer Sensor nach Anspruch 6, wobei mindestens eine Modulationssteuerung (302a, 302b, 302c) einen Polarisationsmodulator zum Anwenden einer gesteuerten Polarisationsmodulation auf die in der erfassenden Faser laufende Abfragestrahlung umfasst.

9. Verteilter faseroptischer Sensor nach Anspruch 7 oder Anspruch 8, wobei es eine Vielzahl der Modulationssteuerungen (302a, 302b, 302c) gibt, die entlang der erfassenden optischen Faser (101) an verschiedenen Stellen angeordnet ist.

10. Verteilter faseroptischer Sensor nach einem der Ansprüche 6 bis 9, wobei die Abfrageeinrichtung (102) einen ersten Polarisationsmodulator (301) umfasst, der einen Polarisationszustand der Abfragestrahlungsausgabe von der Abfrageeinrichtung variiert, wobei der Sensor konfiguriert ist, um den Polarisationszustand der Abfragestrahlungsausgabe von der Abfrageeinrichtung zu variieren, während eine der mindestens einen Modulationssteuerung (302a, 302b, 302c) die gesteuerte Modulation auf die erfassende optische Faser anwendet.

11. Verteilter faseroptischer Sensor nach Anspruch 10, wobei der Prozessor (107) konfiguriert ist, um die erste charakteristische Signatur (203) zu detektieren, die der gesteuerten Modulation zugeordnet ist, die durch die Modulationssteuerung (302a, 302b, 302c) angewendet wird, die die gesteuerte Modulation anwendet, und einen Polarisationszustand zu bestimmen, der einer minimalen Amplitude der ersten charakteristischen Signatur entspricht, die dieser Modulationssteuerung zugeordnet ist.

12. Verteilter faseroptischer Sensor nach Anspruch 11, wobei der Prozessor (107) konfiguriert ist, um im Zeitverlauf jede Variation des Polarisationszustands zu detektieren, der einer minimalen Amplitude der ersten charakteristischen Signatur entspricht, die der gesteuerten Modulation zugeordnet ist, die durch eine Modulationssteuerung (302a, 302b, 302c) angewendet wird.

13. Verteilter faseroptischer Sensor nach Anspruch 12, wobei der Prozessor (107) konfiguriert ist, um jede detektierte Variation des Polarisationszustands, der einer minimalen Amplitude der ersten charakteristischen Signatur entspricht, die der gesteuerten Modulation zugeordnet ist, die durch eine erste Modulationssteuerung (302a, 302b, 302c) angewendet wird, als Hinweis auf eine Dehnungsänderung zu identifizieren, die auf die erfassende Faser (101) stromaufwärts des Aktors wirkt.

14. Verteilter faseroptischer Sensor nach Anspruch 13, wobei der Prozessor konfiguriert ist, um eine gesteuerte Modulation einzustellen, die durch eine zweite Modulationssteuerung (302a) stromaufwärts der ersten Modulationssteuerung (302b) angewendet wird, um die detektierte Variation des Polarisationszustands zu kompensieren, der einer minimalen Amplitude der ersten charakteristischen Signatur entspricht, die der gesteuerten Modulation zugeordnet ist, die durch die erste Modulationssteuerung angewendet wird.

15. Verfahren zur verteilten faseroptischen Erfassung, umfassend:
Abfragen einer erfassenden optischen Faser (101), um eine verteilte akustische Erfassung durchzuführen und ein Messsignal von jedem einer Vielzahl von Kanälen bereitzustellen, die Erfassungsabschnitten der erfassenden optischen Faser entspricht; und
Analysieren der Messsignale, um eine erste charakteristische Signatur (203) zu detektieren, wobei die erste charakteristische Signatur eine Variation des Messsignals von einer Vielzahl von Kanälen umfasst, die für einen ersten Kanal und im Wesentlichen alle nachgeordneten Kanäle gilt und die gleichzeitig auf allen solchen Kanälen auftritt.

## Revendications

1. Capteur à fibre optique distribué (100) comprenant :
un interrogateur (102) pour, en utilisation, interroger une fibre optique de détection (101) pour effectuer une détection acoustique distribuée et fournir un signal de mesure à partir de chacun d'une pluralité de canaux correspondant à des parties de détection de la fibre optique de détection ; et
un processeur (107) configuré pour analyser lesdits signaux de mesure pour détecter une première signature caractéristique, ladite première signature caractéristique (203) comprenant une variation du signal de mesure d'une pluralité de canaux qui s'applique pour un premier canal et sensiblement tous les canaux aval et qui se produit simultanément sur tous ces canaux.

2. Capteur à fibre optique distribué selon la revendication 1, dans lequel le processeur (107) est configuré pour identifier une occurrence de la première signature caractéristique comme une contrainte de grande amplitude.

3. Capteur à fibre optique distribué selon la revendication 2, dans lequel le processeur (107) est configuré pour identifier l'emplacement du premier canal comme l'emplacement de la contrainte de grande amplitude.

4. Capteur à fibre optique distribué selon une quelconque revendication précédente, dans lequel l'interrogateur comprend un modulateur de polarisation (301) pour faire varier périodiquement un état de polarisation de la sortie de rayonnement d'interrogation de l'interrogateur.

5. Capteur à fibre optique distribué selon une quelconque revendication précédente, comprenant en outre ladite fibre optique de détection (101) couplée optiquement à l'interrogateur (102) .

6. Capteur à fibre optique distribué selon la revendication 5 comprenant au moins un dispositif de commande de modulation (302a, 302b, 302c) pour appliquer une modulation contrôlée à la fibre optique de détection.

7. Capteur à fibre optique distribué selon la revendication 6, dans lequel au moins un dispositif de commande de modulation (302a, 302b, 302c) comprend un actionneur couplé mécaniquement à la fibre optique de détection pour appliquer sélectivement une contrainte contrôlée à la fibre optique de détection.

8. Capteur à fibre optique distribué selon la revendication 6, dans lequel au moins un dispositif de commande de modulation (302a, 302b, 302c) comprend un modulateur de polarisation pour appliquer une modulation de polarisation contrôlée au rayonnement d'interrogation se déplaçant dans la fibre de détection.

9. Capteur à fibre optique distribué selon la revendication 7 ou la revendication 8, dans lequel il existe une pluralité desdits dispositifs de commande de modulation (302a, 302b, 302c) agencés le long de la fibre optique de détection (101) à différents emplacements.

10. Capteur à fibre optique distribué selon l'une quelconque des revendications 6 à 9, dans lequel l'interrogateur (102) comprend un premier modulateur de polarisation (301) faisant varier un état de polarisation de la sortie de rayonnement d'interrogation de l'interrogateur, le capteur étant configuré pour faire varier l'état de polarisation d'interrogation de la sortie de rayonnement de l'interrogateur tandis que l'un desdits au moins un dispositifs de commande de modulation (302a, 302b, 302c) applique ladite modulation contrôlée à la fibre optique de détection.

11. Capteur à fibre optique distribué selon la revendication 10, dans lequel le processeur (107) est configuré pour détecter la première signature caractéristique (203) associée à la modulation contrôlée appliquée par le dispositif de commande de modulation (302a, 302b, 302c) appliquant ladite modulation contrôlée et déterminer un état de polarisation correspondant à une amplitude minimale de la première signature caractéristique associée à ce dispositif de commande de modulation.

12. Capteur à fibre optique distribué selon la revendication 11, dans lequel le processeur (107) est configuré pour détecter, dans le temps, toute variation de l'état de polarisation correspondant à une amplitude minimale de la première signature caractéristique associée à la modulation contrôlée appliquée par un dispositif de commande de modulation (302a, 302b, 302c).

13. Capteur à fibre optique distribué selon la revendication 12, dans lequel le processeur (107) est configuré pour identifier toute variation détectée de l'état de polarisation correspondant à une amplitude minimale de la première signature caractéristique associée à la modulation contrôlée appliquée par un premier dispositif de commande de modulation (302a, 302b, 302c) comme indiquant un changement de contrainte agissant sur la fibre de détection (101) en amont dudit actionneur.

14. Capteur à fibre optique distribué selon la revendication 13, dans lequel le processeur est configuré pour régler une modulation contrôlée appliquée par un second dispositif de commande de modulation (302a) en amont du premier dispositif de commande de modulation (302b) de manière à compenser la variation détectée de l'état de polarisation correspondant à une amplitude minimale de la première signature caractéristique associée à la modulation contrôlée appliquée par le premier dispositif de commande de modulation.

15. Procédé de détection par fibres optiques distribuée comprenant :
l'interrogation d'une fibre optique de détection (101) pour effectuer une détection acoustique distribuée et fournir un signal de mesure à partir de chacun d'une pluralité de canaux correspondant à des parties de détection de la fibre optique de détection ; et
l'analyse desdits signaux de mesure pour détecter une première signature caractéristique (203), ladite première signature caractéristique comprenant une variation du signal de mesure d'une pluralité de canaux qui s'applique pour un premier canal et sensiblement tous les canaux aval et qui se produit simultanément sur tous ces canaux.
